# EUROPEAN PATENT SPECIFICATION

(11) **EP 0 988 212 B1**
(45) Date of publication and mention of the grant of the patent: **02.01.2003**
(21) Application number: 98932270.6
(22) Date of filing: 17.06.1998
(51) Int. Cl.: B62K 5/06, B62K 15/00

(54) **PERSONAL MOBILITY VEHICLE**
INDIVIDUELLES MOBILITÄTSFAHRZEUG
VEHICULE DE MOBILITE PERSONNELLE

(30) Priority: 18.06.1997 GB 9712713
(43) Date of publication of application: 29.03.2000
(73) Proprietor: SUNRISE MEDICAL LIMITED, Wollaston, West Midlands DY8 4PS (GB)
(72) Inventor: GILLETT, Peter, William, West Midlands B62 8EX (GB); GOULD, Royston, Mervyn, Kingswinford, West Midlands DY6 8XT (GB)
(74) Representative: Wardley, Diana Mary
(86) International application number: GB9801762
(87) International publication number: WO98057837

(56) References cited:
- US-A- 4 944 359
- US-A- 5 150 762

## Description

The invention relates to a personal mobility vehicle of the kind generally known as a wheelchair, and in particular to such chairs which are powered and have tiller steering.

Such wheelchairs are by their very nature bulky when in their in use configuration. Clearly, it is preferable, for ease of storage and/or transport of such wheelchairs, for it to be possible to reduce them in size from their in use configuration. There are a number of ways of doing this known in the prior art, including folding of the steering tiller downwards and separation of the front and rear chassis portions. Such an arrangement is described in US 5,150,762.

It is an object of the present invention to provide an alternative way of overcoming the above identified problem.

According to the invention there is provided a personal mobility vehicle compaising a chassis, a seat for a user mounted on the chassis, a rear axle bearing wheels, drive means arranged to drive the rear wheels, a front axle bearing at least one wheel, a steeling tiller, connection means adapted to connect the steering tiller to the front axle such that the inclination of the tiller with respect to the front axle is alterable by means of pivoting to a plurality of discrete use positions and such that the tiller is demountable from the vehicle, characterised in that the connection means comprises a rack, being a segment of a circle with a centre and a plurality of teeth around its circumferential portion, connected to the front axle and engagement means are provided on the tiller adapted to engage the teeth, the tiller being bifurcated at its lower end and the connection means further comprising a spindle attached to the bifurcated end of the tiller and a receiving formation attached to the front axle for receipt of the spindle such that when received within the formation the spindle is located at the centre of the rack, the rack being between the bifurcated ends of the tiller, and the tiller being pivotable about the spindle.

The invention provides the advantage that the tiller is adjustable to a plurality of discrete use positions making it more likely that there will be one which is particularly comfortable for the user, and is demountable to reduce the size of the vehicle for storage or transport.

Preferably the tiller is lockable in each of the plurality of discrete use positions.

The receiving formation may conveniently comprise a forward opening slot provided in the rack with a downwardly inclined portion providing a bearing surface at its closed end.

The connection means may further comprise an arcuate groove on each side of the rack which are open at their forward ends and protrusions on inner surfaces of the bifurcated ends of the tiller adapted to engage in the grooves and to move along them as the tiller is pivoted.

The engagement means may comprise biasing means which bias it into engagement with the teeth and means are provided for the user to disengage the engagement means against the bias to pivot the tiller to an alternative use position or to demount the tiller from the vehicle.

An embodiment of personal mobility vehicles according to the invention will now be described, by way of example only, with reference to the accompanying drawings in which:

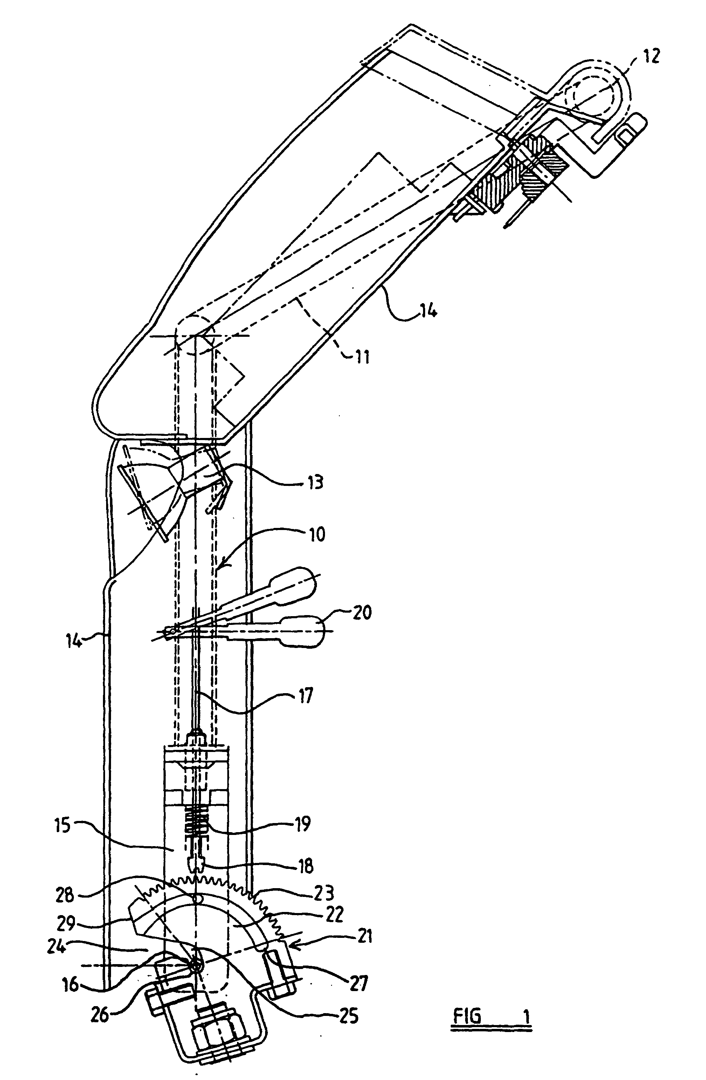

FIGURE 1 illustrates in cross section an embodiment of the invention.

The invention relates to a personal mobility vehicle, or powered wheelchair, of the kind having a chassis, a seat mounted on the chassis, a rear axle bearing wheels, and drive means arranged to drive the rear wheels. However, as these parts of the vehicle are not dependent on the present invention they will, for brevities sake, not be described here. The present invention concerns the steering tiller provided for such a vehicle.

Referring now to Figure 1, a tiller 10 comprises a main member 11, in the general shape of a "dog-leg", which carries at its upper end handle bars 12, to which are attached the various controls provided for such vehicles. A forward facing light 13 is provided on a mid-portion of the main part 11, although this is not a necessity for such vehicles. The tiller 10 is clad with body work 14 to make the vehicle look attractive.

At its lower end the tiller 10 further comprises a bifurcate member 15 providing forks 15a, 15b with a spindle 16 passing through holes provided in the lower ends of the forks 15a, 15b. Protrusions 28 are provided on the inner surface of each fork 15a, 15b, the propose of which will become clear below.

Further an engagement means is provided within the lower potion of the main member 11 and the upper portion of the bifurcate member 15. The engagement means comprises a elongate rod 17, with at its lower end a toothed formation 18, and biasing means in the form of a compression spring 19 which biases the rod 17 and toothed portion downwards. At the upper end of the rod 17 disengagement means are provided in the form of a lever 20 operable by the user of the vehicle.

The vehicle comprises connection means 21 adapted to connect the tiller 10 to the front axle of the vehicle in a manner which permits steering of the vehicle. The connection means may be connected to the front axle in any appropriate manner and therefore that connection will not be described here.

The connection means 21 comprises a rack 22, being a segment of a circle with a centre and a plurality of teeth 23 around its circumferential portion. It further comprises a forward opening slot 24, having a downwardly inclined portion 25 towards its closed end. A bearing surface 26 is provided at the closed end of the slot 24. The connection means 21 further comprises, on each side of the rack 22, an arcuate groove 27 which is open at its forward end. Each arcuate groove 27 forms a part of a circle centred at the centre of the rack 22. The rack 22 is further provided with a cam surface 29 between the slot 24 and the toothed circumference.

The manner of connection of the tiller 10 to the connection means 21, and of its pivoting will now be explained. To connect the tiller 10 to the vehicle it is held in an approximately horizontal orientation in front of the vehicle, the spindle 16 is engaged in the slot 24, and the tiller 10 moved such that the spindle moves to the rear of the slot 24 and onto the beating surface 26. The tiller 10 is then pivoted about the spindle such that the toothed formation 18 rides up over the cam surface 29 and the protrusions 28 engage in the respective grooves 27. The tiller 10 will at this point be located at its foremost use position, with the toothed formation 18 engaged with the foremost teeth 23 of the rack 22.

To pivot the tiller 10 to the desired inclination, the lever 20 is depressed downwards to the lower position illustrated in Figure 1, to raise the rod 17 against the bias of the spring 19 and hence hold the toothed formation 18 clear of the teeth 23 of the rack 22. The tiller 10 is then pivoted about the spindle 16 to the desired inclination with respect to the vehicle, and the lever 20 released. The toothed formation 18 is thus biased into engagement with the appropriate teeth 23 of the rack 22 to lock the tiller 10 at or close to the desired inclination.

To demount the tiller 10 the process of connection described above is reversed, with the additional requirement that the lever 20 must be held in the depressed condition whilst the protrusions 28 are disengaged from the grooves 27, as there is no cam surface provided for movement in this direction to prevent accidental demounting of the tiller 10.

## Claims

1. A personal mobility vehicle comprising a chassis, a seat for a user mounted on the chassis, a rear axle bearing wheels, drive means arranged to drive the rear wheels, a front axle bearing at least one wheel, a steering tiller (10), connection means (21) adapted to connect the steering tiller (10) to the front axle such that the inclination of the tiller with respect to the front axle is alterable by means of pivoting to provide a plurality of discrete use positions, the connection means (21) comprising a rack (22), being a segment of a circle with a centre and a plurality of teeth (23) around its circumferential portion, connected to the front axle and engagement means (17, 18, 19) are provided on the tiller adapted to engage the teeth, **characterised in that** the tiller (10) is demountable from the vehicle, the tiller (10) being bifurcated at its lower end (15) and the connection means (21) further comprising a spindle (16) attached to the bifurcated end (15) of the tiller (10) and a receiving formation attached to the front axle for receipt of the spindle (10) such that when received within the formation the spindle (16) is located at the centre of the rack (22), the rack (22) being between the bifurcated ends (15a, 15b) of the tiller (10), and the tiller (10) being pivotable about the spindle (16).

2. A vehicle according to Claim 1 wherein the tiller is lockable in each of the plurality of discrete use positions.

3. A vehicle according to Claim 1 or Claim 2 wherein the receiving formation comprises a forward opening slot (24) provided in the rack (22) with a downwardly inclined portion (25) providing a bearing surface (26) at its closed end.

4. A vehicle according to any one of Claims 1 to 3 wherein the connection means (21) further comprises an arcuate groove (27) on each side of the rack (22) which are open at their forward ends and protrusions (28) on inner surfaces of the bifurcated ends (15a, 15b) of the tiller (10) adapted to engage in the grooves (27) and to move along them as the tiller (10) is pivoted.

5. A vehicle according to any one of Claims 1 to 4 wherein the engagement means (17, 18, 19) comprises biasing means which bias it into engagement with the teeth and means are provided for the user to disengage the engagement means against the bias to pivot the tiller (10) to an alternative use position or to demount the tiller (10) from the vehicle.

## Patentansprüche

1. Individuelles Mobilitätsfahrzeug mit einem Fahrgestell, einem auf dem Fahrgestell montierten Sitz für einen Nutzer, einer Räder lagernden Hinterachse, einem Antrieb, der dafür eingerichtet ist, die Hinterräder anzutreiben, einer Vorderachse, die zumindest ein Rad lagert, einer Lenkdeichsel (10), einer Verbindung (21), die dafür eingerichtet ist, die Lenkdeichsel (10) mit der Vorderachse so zu verbinden, dass die Neigung der Deichsel bezüglich der Vorderachse mittels Schwenken änderbar ist, um mehrere diskrete Gebrauchsstellungen vorzusehen, wobei die Verbindung (21) eine mit der Vorderachse verbundene Zahnstange (22) aufweist, die ein Segment eines Kreises mit einem Zentrum und mehreren Zähnen (23) um dessen Umfangsabschnitt ist, und Eingriffseinrichtungen (17, 18, 19) auf der Deichsel vorgesehen sind, die dafür eingerichtet sind, mit den Zähnen in Eingriff zu kommen, **dadurch gekennzeichnet, dass** die Deichsel (10) vom Fahrzeug abmontierbar ist, wobei die Deichsel (10) an ihrem unteren Ende (15) gegabelt ist und die Verbindung (21) ferner eine am gegabelten Ende (15) der Deichsel (10) angebrachte Spindel (16) und ein Aufnahmegebilde aufweist, das an der Vorderachse zur Aufnahme der Spindel (16) angebracht ist, so dass die Spindel (16), wenn sie in dem Aufnahmegebilde aufgenommen ist, sich bei der Mitte der Zahnstange (22) befindet, wobei die Zahnstange (22) zwischen den gegabelten Enden (15a, 15b) der Deichsel (10) ist und die Deichsel (10) um die Spindel (16) schwenkbar ist.

2. Fahrzeug nach Anspruch 1, worin die Deichsel in jeder der Mehrzahl diskreter Gebrauchsstellungen verriegelbar ist.

3. Fahrzeug nach Anspruch 1 oder Anspruch 2, worin das Aufnahmegebilde einen in der Zahnstange (22) vorgesehenen vorderen Öffnungsschlitz (24) mit einem nach unten geneigten Abschnitt (25) aufweist, der an seinem geschlossenen Ende eine Lagerfläche (26) bildet.

4. Fahrzeug nach einem der Ansprüche 1 bis 3, worin die Verbindung (21) ferner auf jeder Seite der Zahnstange (22) eine bogenförmige Rille (27) aufweist, die an ihren Vorderenden offen sind, und Vorsprünge (28) auf den Innenflächen der gegabelten Enden (15a, 15b) der Deichsel (10), die dafür eingerichtet sind, in den Rillen (27) in Eingriff zu kommen und sich entlang diesen zu bewegen, während die Deichsel (10) geschwenkt wird.

5. Fahrzeug nach einem der Ansprüche 1 bis 4, worin die Eingriffseinrichtung (17, 18, 19) eine Vorspanneinrichtung aufweist, die sie in Eingriff mit den Zähnen vorspannt, und Einrichtungen für den Nutzer vorgesehen sind, um die Eingriffseinrichtung gegen die Vorspannung außer Eingriff zu bringen, um die Deichsel (10) in eine andere Gebrauchsstellung zu schwenken oder die Deichsel (10) vom Fahrzeug abzumontieren.

## Revendications

1. Véhicule de mobilité personnelle comprenant un châssis, un siège pour utilisateur monté sur le châssis, un essieu arrière portant des roues, un moyen d'entraînement agencé pour entraîner les roues arrière, un essieu avant portant au moins une roue, un timon de direction (10), un moyen de connexion (21) adapté à relier le timon de direction (10) à l'essieu avant de manière que l'inclinaison du timon par rapport à l'essieu avant soit modifiable par pivotement pour obtenir une pluralité de positions d'utilisation ponctuelles, le moyen de connexion (21) comprenant une crémaillère (22), étant un segment d'un cercle avec un centre et une pluralité de dents (23) autour de sa partie circonférentielle, reliée à l'essieu avant et un moyen d'engagement (17, 18, 19) prévu sur le timon adapté à engager les dents, **caractérisé en ce que** le timon (10) est démontable du véhicule, le timon (10) étant fourchu à son extrémité inférieure (15) et le moyen de connexion (21) comprenant également une broche (16) fixée à l'extrémité fourchue (15) du timon (10) et un élément récepteur fixé à l'essieu avant pour réception de la broche 16) de manière que, une fois reçue au sein de l'élément, la broche (16) soit située au centre de la crémaillère (22), la crémaillère (22) étant située entre les extrémités de fourche (15a, 15b) du timon (10), et le timon (10) étant adapté à pivoter autour de la broche (16).

2. Véhicule selon la revendication 1, dans lequel le timon est adapté à être verrouillé dans chacune des positions de la pluralité de positions d'utilisation ponctuelles.

3. Véhicule selon la revendication 1 ou la revendication 2, dans lequel l'élément récepteur comprend une fente s'ouvrant vers l'avant (24) ménagée dans la crémaillère (22) avec une partie inclinée vers le bas (25) formant une surface portante (26) à son extrémité fermée.

4. Véhicule selon l'une quelconque des revendications 1 à 3, dans lequel le moyen de connexion (21) comprend également une rainure arquée (27) sur chaque côté de la crémaillère (22) qui est ouverte à son extrémité avant et des protubérances (28) sur les surfaces internes des extrémités de fourche (15a, 15b) du timon (10), adaptées à s'engager dans les rainures (27) et à se déplacer le long de celles-ci tandis que le timon (10) est amené à pivoter.

5. Véhicule selon l'une quelconque des revendications 1 à 4, dans lequel le moyen d'engagement (17, 18, 19) comprend un moyen de sollicitation qui le sollicite en engagement avec les dents et un moyen est prévu pour l'utilisateur pour dégager le moyen d'engagement à l'encontre de la sollicitation de manière à faire pivoter le timon (10) jusqu'à une autre position d'utilisation ou démonter le timon (10) du véhicule.
